# EUROPEAN PATENT APPLICATION

(11) **EP 2 900 007 A1**
(43) Date of publication of application: **29.07.2015**
(21) Application number: 14198269.4
(22) Date of filing: 16.12.2014
(51) Int. Cl.: H04W 12/08, H04W 4/02, H04W 84/12

(54) **Electronic device and method for performing geo-fencing based service**

(30) Priority: 28.01.2014 KR 20140010566
(71) Applicant: Samsung Electronics Co., Ltd, Gyeonggi-do 443-742 (KR)
(72) Inventor: Shin, Sang-Min, 443-742 Gyeonggi-do (KR); Kang, Won-Do, 443-742 Gyeonggi-do (KR); Sin, Jin-Hyun, 443-742 Gyeonggi-do (KR)
(74) Representative: Nederlandsch Octrooibureau

(57) **Abstract**

Examples of the present disclosure provide an electronic device and method for performing a geo-fencing based service. Access information is received from a beacon message and a communication network is used to access a geographical network.

## Description

### TECHNICAL FIELD

The present disclosure relates to an electronic device and method for performing a geo-fencing based service in the electronic device.

### BACKGROUND

Recently, there has been an attempt to provide various services based on geo-fencing. Geo-fencing refers to virtual boundaries of a geological area or a particular region. The term geo-fence is a combination of 'geo' and 'fence', meaning a virtual perimeter for a real-world geographic area. A geo-fence may be dynamically generated as a radius around a particular point (e.g., as a space within a 100 meter radius around a particular store) or may be a predefined set of boundaries (e.g., school zones or administrative districts).

Modem electronic devices have become more portable; developed more advanced communication abilities; and are more capable of providing ubiquitous location-based services with location information (e.g., Base Station (BS) signals and Global Positioning System (GPS) satellite signals etc.). Unfortunately, electronic devices seldom offer geo-fencing based services.

### SUMMARY

Examples of the present disclosure provide an electronic device and method for performing a geo-fencing based service.

Examples of the present disclosure provide an electronic device and method for performing a geo-fencing based service, which conveniently offer users located within a geo-fence wireless network access information.

Examples of the present disclosure provide an electronic device and method for performing a geo-fencing based service, which conveniently offer users located within a geo-fence not only wireless network access information but also additional information related to the geo-fence.

In accordance with an aspect of the present disclosure, an electronic device for performing a geo-fencing based service is provided. The electronic device may include a receiver for receiving a beacon message; a communication unit for accessing a communication network using wireless access information; and a controller configured to obtain the wireless access information by using the beacon message; control the communication unit to use the wireless access information to access the communication network.

In accordance with another aspect of the present disclosure, a method for performing a geo-fencing based service is provided. The method may include: receiving a beacon message; obtaining wireless access information by using the beacon message; and accessing a communication network using the wireless access information.

In accordance with another aspect of the present disclosure, a geo-fencing system is provided. The geo-fencing system may include a beacon device configured to broadcast a beacon message that includes wireless access information; and a wireless access device configured to use the wireless access information for an electronic device to access a communication network.

Other aspects, advantages, and salient features of the disclosure will become apparent to those skilled in the art from the following detailed description, which, taken in conjunction with the annexed drawings, discloses examples of the disclosure

### BRIEF DESCRIPTION OF THE DRAWINGS

The above and other features and advantages of the present disclosure will become more apparent by describing in detail examples thereof with reference to the attached drawings in which:
FIG. 1 is a schematic diagram for of an example geo-fencing system in accordance with aspects of the present disclosure;
FIG. 2 is a working example of wireless access information being provided to an example electronic device in a geo-fencing system, in accordance with aspects of the present disclosure;
FIG. 3 illustrates an example beacon message in accordance with aspects of the present disclosure;
FIG. 4 is a flowchart illustrating an example method for performing geo-fencing services in accordance with aspects of the present disclosure;
FIG. 5 is a flowchart illustrating a further example method for performing geo-fencing services in accordance with aspects of the present disclosure;
FIG. 6 is block diagram of an example electronic device in accordance with aspects of the present disclosure;
FIG. 7 is a flowchart illustrating example wireless network access operations in an electronic device in accordance with aspects of the present disclosure; and
FIGS. 8A and 8B illustrate example screen images resulting from a geo-fencing based service in an electronic device.

Throughout the drawings, like reference numerals will be understood to refer to like parts, components, and structures.

### DETAILED DESCRIPTION

The present disclosure will now be described more fully with reference to the accompanying drawings. It is understood that the techniques of the present disclosure may be implemented in many different forms and should not be construed as being limited to the examples set forth herein; rather, these examples are provided for thoroughness, completeness, and to fully convey the techniques to those skilled in the art. Like reference numerals in the drawings denote like elements, and thus their description will be omitted.

It will be understood that, although the terms first, second, third, etc., may be used herein to describe various elements, components, regions, layers and/or sections, these elements, components, regions, layers and/or sections should not be limited by these terms. These terms are only used to distinguish one element, component, region, layer or section from another region, layer or section. Thus, a first element, component, region, layer or section discussed below could be termed a second element, component, region, layer or section without departing from the teachings of the present disclosure. The terminology used herein is for the purpose of describing particular examples only and is not intended to be limiting of the invention. It is to be understood that the singular forms "a," "an," and "the" include plural references unless the context clearly dictates otherwise.

The term "include (or including)" or "comprise (or comprising)" is inclusive or open-ended and does not exclude additional, unrecited elements or method steps. "Unit", "module", "block", etc. used herein each represent a unit for handling at least one function or operation, and may be implemented in hardware, software, or a combination thereof.

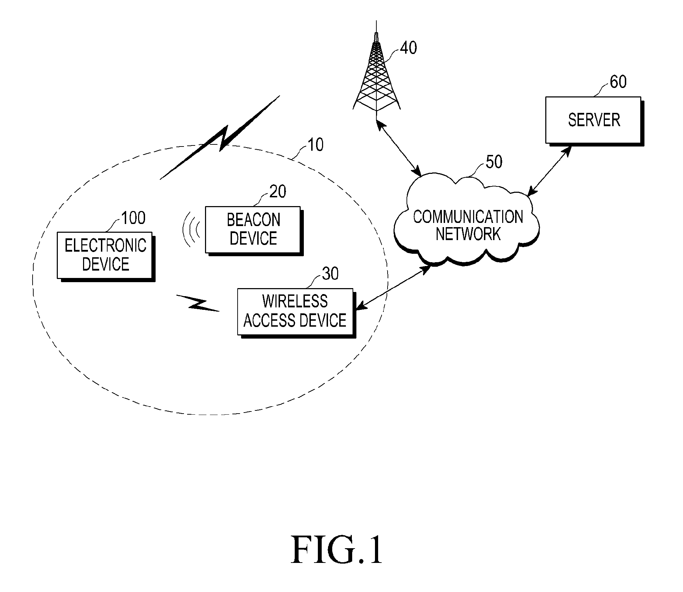

Referring to FIG. 1, a schematic diagram of an example geo-fencing system is shown. A geo-fencing system may provide a geo-fencing service through an electronic device within a virtual radius, e.g., a predefined geo-fence 10. Predefined geo-fence 10 may be a predefined geographical area. In this example, the geo-fencing system may include a beacon device 20, a wireless access device 30, and a server 60.

The beacon device 20 may broadcast a predefined beacon message. In one example, the beacon device 20 may be a Bluetooth Low Energy (BLE) beacon device that may perform low power communication based on Bluetooth 4.0. The beacon message may include IDentification (ID), access information, or Universal Resource Locator (URL) information. The beacon message may also include a predefined ID, wireless access information, URL information, or any combination thereof. Thus, the information in the beacon message may be used to access a geographical network associated with a geo-fence. The ID may be used to identify the geo-fence 10. The access information may include information for the electronic device 100 to access a wireless network within geo-fence 10. The URL information may also be associated with the geo-fence 10. The beacon message may further include other additional information, such as advertisement information, in addition to the foregoing.

The wireless access device 30 may allow at least one electronic device, including electronic device 100, to wirelessly access a communication network 50. For example, the wireless access device 30 may be an Access Point (AP), located between communication network 50 and at least one electronic device. Thus, an electronic device may access communication network 50 through wireless access device 30. The wireless access device 30 may send a request for wireless access information that allows an electronic device that responds to such request to access communication network 50. Communication network 50 may be any kind of network, such as the Internet.

Server 60 may be connected to the electronic device 100 over communication network 50. The server 60 may store information regarding at least one geographical network or geo-fence including the geo-fence 10 and provide the information to the electronic device 100. For example, the server 60 may store an ID to identify the geo-fence 10 with information corresponding to the ID. For example, the information corresponding to the ID may be wireless access information, URL information, or other information, such as advertising information, which corresponds to the ID.

The electronic device 100 may receive a beacon message broadcast from the beacon device 20 when the electronic device 100 is within a predefined range from the beacon device 20. The electronic device 100 may obtain identification (or ID), wireless access information, URL information, other additional information, or a combination thereof from the beacon message. If obtaining wireless access information from the beacon message, the electronic device 100 may use the wireless access information to wirelessly access the communication network 50 through the wireless access device 30. If obtaining an ID from the beacon message, the electronic device 100 may send the ID to the server 60 through a Base Station (BS) 40, and receive wireless access information, URL information, or additional information corresponding to the ID from the server 60.

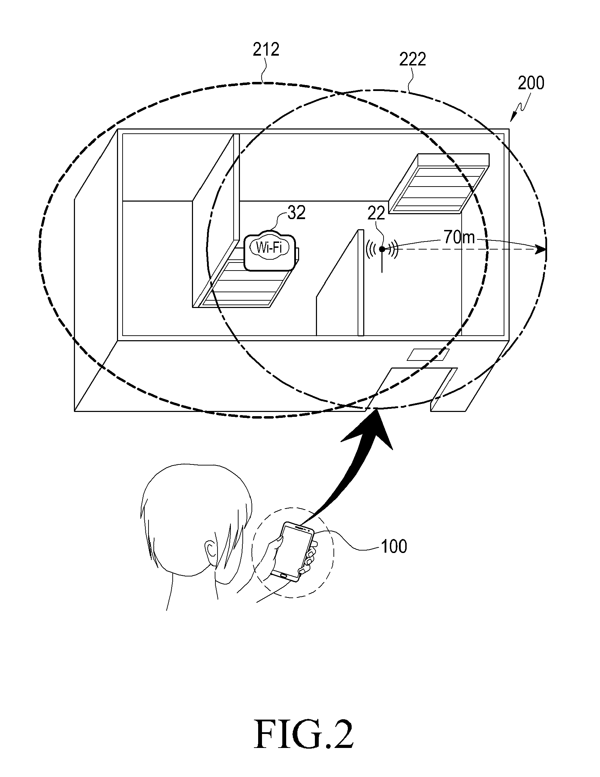

Referring to FIG. 2, a working example of go-fence access is shown. The geo-fence may be in a predefined area 200 of e.g., a building, shopping mall, shop, or the like. In the predefined area 200, a BLE beacon device 22 corresponding to the beacon device 20 of FIG. 1 and a Wireless Fidelity (Wi-Fi) access device corresponding to wireless access device 30 of FIG. 1 may be installed. A beacon message broadcast from the BLE beacon device 22 may be received within a predefined range, e.g., in a radius of 70M, and a communicative distance to the Wi-Fi access device 32 may be e.g., within the predefined area 200.

If a user carrying the electronic device 100 enters the predefined area 200, the electronic device 100 may receive the beacon message from the BLE beacon device 22. In an example where the beacon message includes Wi-Fi access information, the electronic device 100 may obtain the Wi-Fi access information from the beacon message and access a wireless network through the Wi-Fi access device 32 using the Wi-Fi access information. In another example where the beacon message includes an ID, the electronic device 100 may send the ID to the server 60 and be provided information corresponding to the ID from the server 60. If the information corresponding to the ID is Wi-Fi access information, the electronic device 100 may access the wireless network through the Wi-Fi access device 32; if the information is URL information, the electronic device 100 may run the URL; if the information is advertising information, the electronic device 100 may display the advertising information; and if the information is other additional information, the electronic device 100 may display the additional information. In yet another example, if the beacon message includes a URL, the electronic device 100 may access a web network through mobile communication and run the URL.

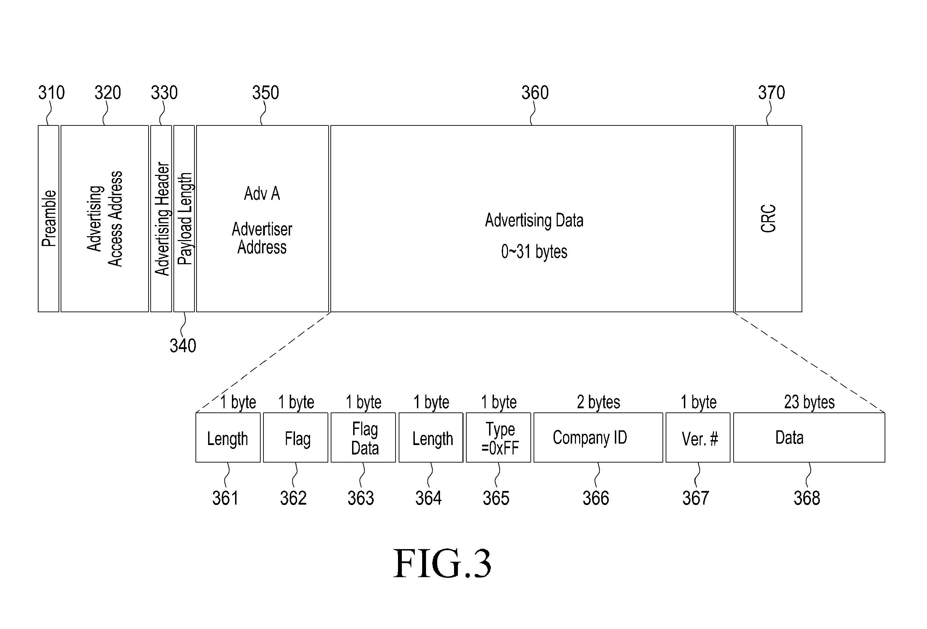

FIG. 3 illustrates an example beacon message. The example beacon message may be in a format of a BLE advertising packet. For example, the BLE Advertising packet may include fields of preamble 310, advertising access address 320, advertising header 330, payload length 340, advertiser address 350, advertising data 360, and Cyclic Redundancy Check (CRC) 370. The advertising data 360 may be allocated 0∼31 bytes, including fields of length 361, flag 362, flag data 363, length 364, type=0xFF 365, company ID 366, ver. # 367, and data 368. An ID may be included in the company ID 366 field, and wireless access information, URL information, advertising information, and other additional information may be included in the data 368 field.

The electronic device 100 may receive the BLE advertising packet message and obtain at least one of the ID, wireless access information, URL information, advertising information, and other additional information from the BLE advertising packet message. While the beacon message is illustrated as being implemented in the BLE advertising packet format in this example, the beacon message may be implemented in any other format.

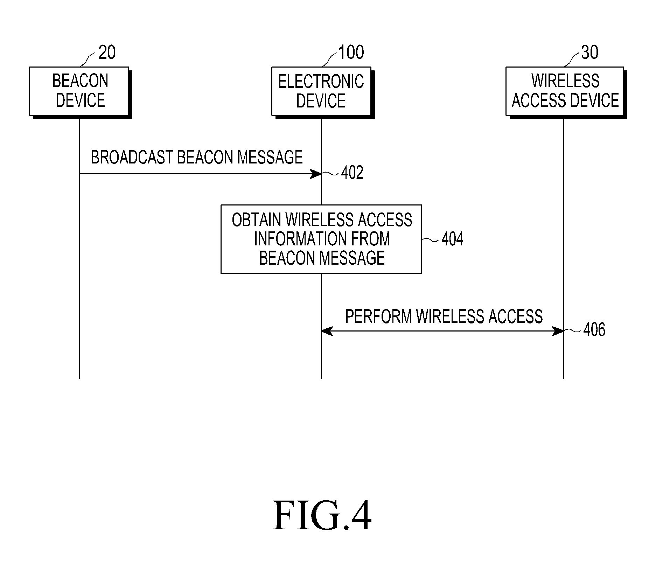

FIG. 4 is a flowchart illustrating an example method for performing geo-fencing based services in accordance with aspects of the present disclosure.

Referring to FIG. 4, in operation 402, the beacon device 20 may broadcast a beacon message. The beacon message may include wireless access information. Upon receipt of the beacon message, electronic device 100 may obtain the wireless access information from the beacon message, in operation 404. The wireless access information may include a bearer type, an identifier, an encryption type, and/or a password of a wireless network. The bearer type of the wireless network may include information regarding whether the wireless network is of a Wi-Fi type or any other communication type. The identifier of the wireless network may include an ID of the wireless access device 30 for wireless network access. For example, if the wireless access device 30 is an AP, the ID may be an Extended Service Set Identity (ESS ID). The encryption type of the wireless network is a type for encrypting signals communicated over the wireless network, and may include e.g., any of Wireless-Public Key Infrastructure (WPKI), Wi-Fi Protected Access (WPA), and Wi-Fi Protected Access 2 (WPA2). The password of the wireless network may include password information to access the wireless network.

In operation 406, the electronic device 100 may use the wireless access information to access the communication network 50 using the wireless access device 30. The electronic device 100 may be provided a communication network service(e.g, internet service, etc.) over the communication network 50.

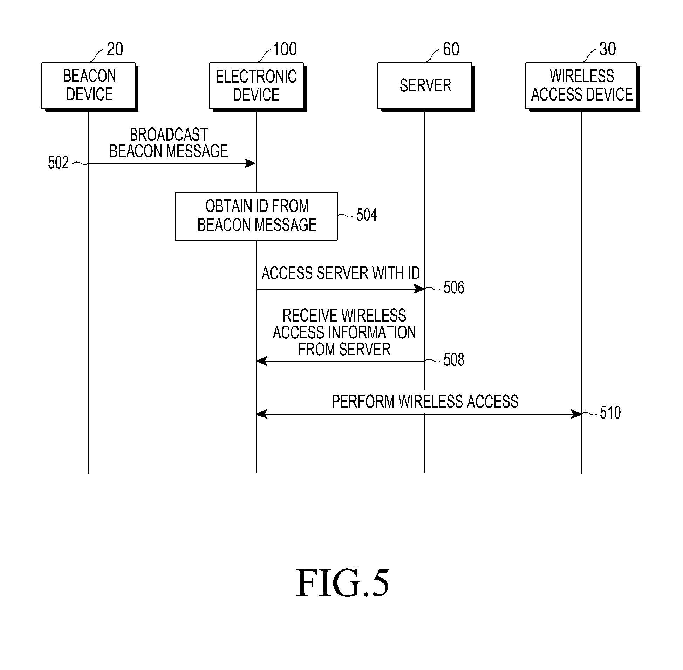

FIG. 5 is a flowchart illustrating another example method for performing geo-fencing based services. In operation 502, the beacon device 20 may broadcast a beacon message. The beacon message may include ID information. The electronic device 100, upon reception of the beacon message, may obtain the ID information from the beacon message, in operation 504. The ID information may include an ID for identifying the geo-fence 10 or the predefined area 200.

In operation 506, the electronic device 100 may send the ID to the server 60 through mobile communication. The server 60 may store information corresponding to the ID. For example, the information corresponding to the ID may be wireless access information, or other information, such as URL information or advertising information, which corresponds to the ID. The server 60 may send the wireless access information corresponding to the ID to the electronic device 100. In addition, the server 60 may further send the other information, such as URL information or advertising information corresponding to the ID.

In operation 508, the electronic device 100 may receive the wireless access information from the server 60. The wireless access information may include a bearer type, identifier, encryption type, and/or a password of a wireless network. The bearer type of the wireless network may include information regarding whether the wireless network is of a Wi-Fi type or any other communication type. The identifier of the wireless network may include an ID of the wireless access device 30 for wireless network access. For example, if the wireless access device 30 is an AP, the ID may be an Extended Service Set Identity (ESS ID). The encryption type of the wireless network is a type for encrypting signals communicated over the wireless network, and may include e.g., any of WPKI, WPA, and WPA2. The password of the wireless network may include password information to access the wireless network.

In operation 510, the electronic device 100 may use the wireless access information to access the communication network 50 through the wireless access device 30.

In one example, the electronic device 100 may be a portable terminal that is able to receive the beacon message and access the wireless network. For example, the electronic device 100 may include at least one of smart phones, tablet Personal Computers (PCs), mobile phones, video phones, e-book readers, desktop PCs, laptop PCs, netbook computers, Personal Digital Assistants (PDAs), Portable Multimedia Players (PMPs), MP3 players, mobile medical devices, cameras, and wearable devices (e.g., Head-Mounted Devices (HMDs), such as electronic glasses, electronic clothes, electronic bracelets, electronic necklaces, electronic accessories, or smart watches).

In other examples, the electronic device 100 may be a smart home appliance. The smart home appliance may include at least one of e.g., televisions, Digital Video Disc (DVD) players, audio systems, refrigerators, air conditioners, cleaning machines, ovens, microwaves, washing machines, air purifiers, set-top boxes, TV sets (e.g., Samsung HomeSync™, Apple TV™, or Google TV™), game consoles, electronic dictionaries, camcorders, and electronic albums.

In some examples, the electronic device 100 may include at least one of navigation devices and car infotainment devices. In other examples, the electronic device 100 may include at least one of furniture, buildings/architectures, electronic boards, electronic signature receiving devices, and projectors. The electronic device 100 in accordance with an example of the present disclosure may be one or more combinations of the aforementioned devices. However, the electronic device 100 in accordance with examples of the present disclosure is not limited to the aforementioned devices, and it will be appreciated that any device may be the electronic device 100 in other examples.

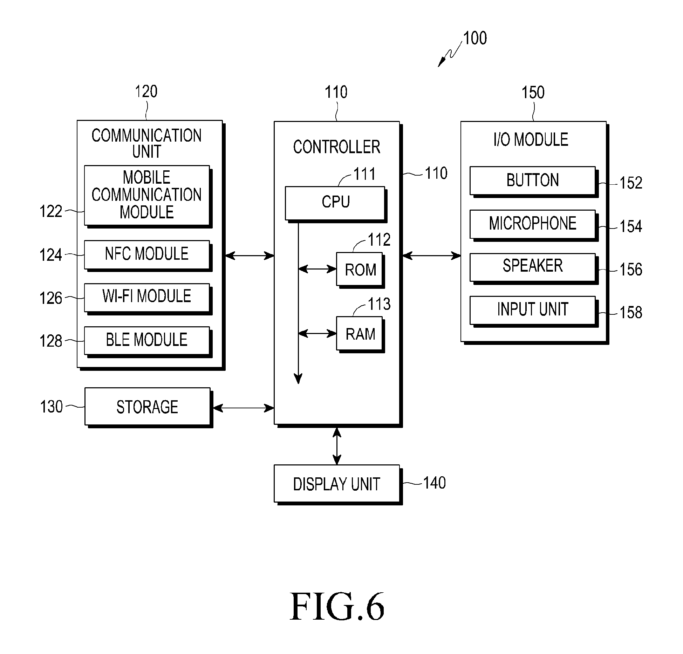

FIG. 6 is block diagram of an example electronic device 100 in accordance with aspects of the present disclosure. Electronic device 100 may include a controller 110, a communication unit 120, a storage 130, a display unit 140, and an input/output unit 150.

The controller 110 may be a Central Processor Unit (CPU) 111. The controller 110 may include a Digital Signal Processor (DSP), a Read Only Memory (ROM) 112 for storing a control program to control the electronic device 100, and a Random Access Memory (RAM) 113 for storing signals or data input from an outside or for being used as a memory space for working results of the electronic device 100. The CPU may include a single core, dual cores, triple cores, or quad cores. CPU, ROM, and RAM may be connected to each other via an internal bus. The controller 110 may control the communication unit 120, the storage 130, the display unit 140, and the input/output unit 150. For example, the controller 110 may control overall operations of the electronic device 100, controlling signal flows among the aforementioned components.

For example, the controller 110 may obtain wireless access information by using a beacon message, and perform control operations for wireless access using the wireless access information. The controller 110 may also obtain URL information by using a beacon message, and perform control operations to access a web page corresponding to the URL.

The communication unit 120 may connect the electronic device 100 to an external device. The external device may include other electronic devices, such as cell phones, smart phones, or tablet PCs, and the wireless access device 30 as shown in FIG. 1. For example, the communication unit 120 may include a mobile communication module 122, a Near Field Communication (NFC) module 124, a Wi-Fi module 126, and a BLE module 128. The communication unit 120 may exchange wireless signals for making voice calls, video calls, Short Messaging Services (SMSs) or Multimedia Messaging Services (MMSs) with other electronic devices (not shown), such as cell phones, smart phones, tablet PCs, etc., which have their own phone numbers. The communication unit 120 may also exchange NFC signals with other electronic devices through the NFC module 124.

Furthermore, the communication unit 120 may access the wireless access device 30 using a wireless network communication module in an area where the wireless access device 30 is installed, under control of the controller 110. For example, the wireless network communication module may be the Wi-Fi module 126. For example, the Wi-Fi module 126 may access the Internet through the wireless access device 30 in an area where an AP, the wireless access device 30, is installed. The BLE module 128 is a beacon message receiver, receiving a beacon message broadcast from an external beacon device, e.g., an external BLE beacon device.

The storage 130 may store input/output signals or data resulting from operations of the controller 110, the communication unit 120, the display unit 140, and the input/output unit 150, under control of the controller 110. The storage 130 may store a plurality of programs for controlling the electronic device 100 or the controller 110, a plurality of applications and various functions, and especially, programs and data for carrying out a wireless network access function. Furthermore, the storage 130 may store programs or applications for performing a geo-fencing based service in accordance with the examples of the present disclosure.

The term "storage" may refer not only to the storage 130, but also to the ROM 112, RAM 113 in the controller 110, or a memory card (e.g., a Secure Digital (SD) card, a memory stick) installed in the electronic device 100. The storage 130 may also include a non-volatile memory, a volatile memory, a Hard Disc Drive (HDD), or a Solid State Drive (SSD). The storage 130 may be a non-transitory machine-readable (or computer-readable) medium, which may be defined as a medium for providing data for a machine to perform a particular function. The machine-readable medium may be a storage medium. The storage 130 may include non-volatile and volatile media. These media should be all tangible for a mechanical device to read out instructions embodied on the media. The non-transitory machine-readable media may include, but not limited to, at least one of floppy disks, flexible disks, hard disc, magnetic tapes, Compact Disc Read-Only Memories (CD-ROMs), optical discs, punch cards, paper tapes, RAMs, Programmable ROMs (PROM), Erasable PROMs (EPROMs), and flash-EPROMs.

The display unit 140 may be a touch screen, providing a graphical user interface for the user while accessing a wireless network. For example, the display unit 140 may receive various gesture inputs, such as hovering or touching with the user's body part (e.g., one or more fingers including the thumb) or an input unit 158, e.g., a pen designed to be able to touch the display unit 140. The display unit 140 may be implemented in various methods e.g., a resistive method, capacitive method, infrared method, or acoustic wave method. In an example, the display unit 140 may display screen images resulting from wireless network access under control of the controller 110 and screen images providing an Internet service after the wireless network access.

The input/output unit 150 may include a button 152, a microphone 154, a speaker 156, and the input unit 158. However, the input/output unit 150 is not limited thereto, and may also include a cursor control, such as a mouse, a trackball, joystick, or a cursor direction keys to control communications with the controller 110 and cursor movements on the display unit 140. The button 152 may be plural in number and equipped in the electronic device 100. Various input signals resulting from the user's pressure against the button 152 may be provided to the controller 110. The microphone 154 may generate electric signals by receiving a voice or sound from various sound sources under control of the controller 110. The speaker 156 may output sounds corresponding to various signals (e.g., wireless signals, broadcasting signals, digital audio files, digital video files, etc.) to the outside of the electronic device 100, under control of the controller 110. The input unit 158 may be a device or object that may be inserted into the electronic device 100 or arranged separately. Being inserted and kept in the electronic device 100, the input unit 158 may be drawn out or detachable. The input unit 158 may be an input means, such as a stylus pen (or simply pen), the user's finger, or the like, which may hover over or touch the display unit 140.

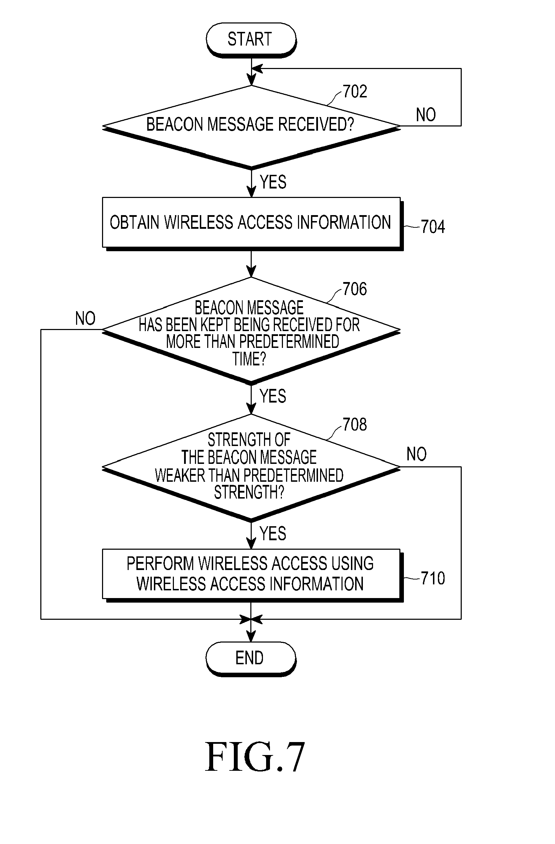

FIG. 7 is a flowchart illustrating another example method for accessing a wireless network. In operation 702, the electronic device 100 may determine whether a beacon message has been received. In operation 704, the electronic device 100, upon reception of the beacon message, may obtain wireless access information by using the beacon message. For example, the electronic device 100 may obtain the wireless access information included in the beacon message, or receive the wireless access information from the server 60 using an ID included in the beacon message.

With the wireless access information, in operation 706, the electronic device 100 may determine whether the beacon message has been received for more than a predetermined time. For example, the electronic device 100 may determine whether the beacon message has been kept being received for more than a predetermined time.

If the beacon message has been kept being received for more than the predetermined time, in operation 708, the electronic device 100 may determine whether the strength of the received beacon message is weaker than a predetermined signal strength.

If the received beacon message has not become weaker than the predetermined signal strength for more than a predetermined time, in operation 710, the electronic device 100 may access the communication network through the wireless access device 30 using the wireless access information.

Otherwise, if the beacon message has not been received for more than a predetermined time or if the received beacon message has become weaker than the predetermined strength in the predetermined time even if the beacon message has been received for more than the predetermined time, the electronic device 100 may not perform wireless access and the process ends.

While the examples illustrate that electronic device 100 performs wireless access if the beacon message has not become weaker than a predetermined strength in a predetermined time, in other examples, the electronic device 100 may perform wireless access if the beacon message has been received for more than the predetermined time and may perform wireless access if the beacon message has not become weaker than the predetermined strength in the predetermined time.

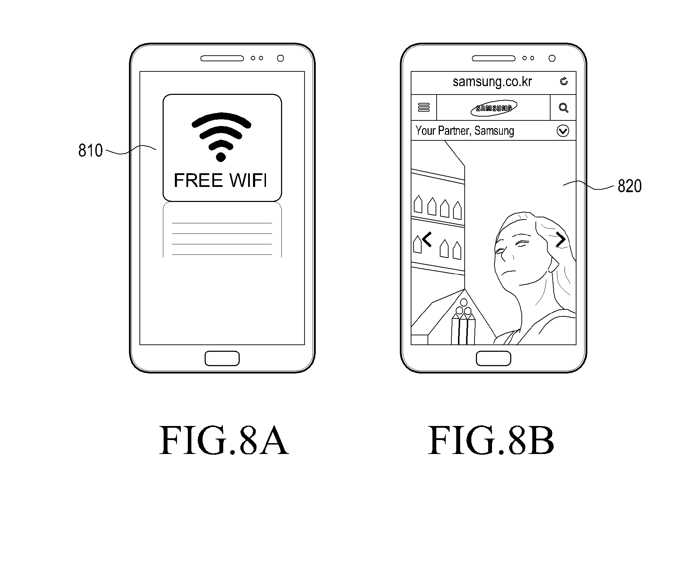

FIGS. 8A and 8B illustrate example screen images resulting from a geo-fencing based service in accordance with aspects of the present disclosure. Referring to FIG. 8A, the electronic device 100 may display a screen indicating that a wireless network communication service, e.g., FREE WI-FI, is available as shown in screen 810, if the electronic device 100 has succeeded in performing WI-FI access with wireless access information obtained by using a beacon message.

Referring to FIG. 8B, the electronic device 100 may display a web-page screen corresponding to a URL if the electronic device 100 has succeeded in accessing the URL address according to URL information obtained from the beacon message, as shown in screen 820.

Advantageously, providing geo-fencing based services through an electronic device allows the user to conveniently get various information associated with a geographic range. In addition, using wireless network access information as geo-fence information, the electronic device allows a user located within a geographic range to conveniently access a wireless network.

Furthermore, additional information related to the geographic range may be used, such as URL information. In this regard, the electronic device allows the user to conveniently perform wireless network access and access a URL related to the geographic range.

The above-described embodiments of the present disclosure can be implemented in hardware, firmware or via the execution of software or computer code that can be stored in a recording medium such as a CD ROM, a Digital Versatile Disc (DVD), a magnetic tape, a RAM, a floppy disk, a hard disk, or a magneto-optical disk or computer code downloaded over a network originally stored on a remote recording medium or a non-transitory machine readable medium and to be stored on a local recording medium, so that the methods described herein can be rendered via such software that is stored on the recording medium using an electronic device or a special processor or in programmable or dedicated hardware, such as an ASIC or FPGA. As would be understood in the art, the electronic device, the processor, microprocessor controller or the programmable hardware include memory components, e.g., RAM, ROM, Flash, etc. that may store or receive software or computer code that when accessed and executed by the electronic device, processor or hardware implement the processing methods described herein. In addition, it would be recognized that when a device accesses code for implementing the processing shown herein, the execution of the code transforms the device into a special purpose computer for executing the processing shown herein. Any of the functions and steps provided in the Figures may be implemented in hardware, software or a combination of both and may be performed in whole or in part within the programmed instructions of a computer. No claim element herein is to be construed under the provisions of 35 U.S.C. 112, sixth paragraph, unless the element is expressly recited using the phrase "means for".

In addition, an artisan understands and appreciates that a "processor" or "microprocessor" constitute hardware in the claimed invention. Under the broadest reasonable interpretation, the appended claims constitute statutory subject matter in compliance with 35 U.S.C. §101.

Several examples have been described in connection with e.g., mobile communication terminals, but it is understood that various modifications can be made without departing from the spirit and scope of the present disclosure. Thus, it will be apparent to those skilled in the art that the disclosure is not limited to the examples described herein, which have been provided only for illustrative purposes.

## Claims

1. An electronic device comprising:
a receiver for receiving a beacon message;
a communication unit for accessing a communication network using wireless access information; and
a controller configured to obtain the wireless access information by using the beacon message; control the communication unit to use the wireless access information to access the communication network.

2. The electronic device of claim 1, wherein the beacon message contains the wireless access information, and
wherein the controller is configured to obtain the wireless access information from the beacon message.

3. The electronic device of claim 1, wherein the beacon message contains IDentification (ID) to identify a predefined area, and
wherein the controller is configured to obtain the wireless access information corresponding to the ID from the beacon message.

4. The electronic device of claim 1, wherein the wireless access information comprises
bearer information of a wireless network;
an identifier of the wireless network;
an encryption type of the wireless network; and
a password of the wireless network.

5. The electronic device of claim 1, wherein the beacon message contains Universal Resource Locator (URL) information, and
wherein the controller is configured to access a web page corresponding to a URL using the URL information.

6. The electronic device of claim 1, wherein the controller is configured to control the communication unit to access the communication network using the wireless access information, if the beacon message has been received for more than a predetermined time and has not become weaker than a predetermined receive strength.

7. A method for performing a geo-fencing based service in an electronic device, the method comprising:
receiving a beacon message;
obtaining wireless access information by using the beacon message; and
accessing a communication network using the wireless access information.

8. The method of claim 7, wherein the beacon message contains the wireless access information, and
wherein the electronic device obtains the wireless access information from the beacon message.

9. The method of claim 7, wherein the beacon message contains IDentification (ID) to identify a predefined area, and
wherein the electronic device sends the ID to a server and obtains the wireless access information corresponding to the ID from the server.

10. The method of claim 7, wherein the beacon message contains Universal Resource Locator (URL) information, and
the method further comprising accessing a web page corresponding to a URL using the URL information.

11. The method of claim 7, wherein the electronic device accesses the communication network using the wireless access information, if the beacon message has been received for more than a predetermined time and has not become weaker than a predetermined receive strength.

12. A geo-fencing system comprising:
a beacon device configured to broadcast a beacon message that includes wireless access information; and
a wireless access device configured to use the wireless access information for an electronic device to access a communication network.

13. The geo-fencing system of claim 12, wherein the beacon device is configured to broadcast the beacon message that includes IDentification (ID), and
wherein the geo-fencing system further comprises a server for receiving the ID from the electronic device and sending wireless access information corresponding to the ID to the electronic device.

14. The geo-fencing system of claim 12, wherein the beacon device is configured to broadcast the beacon message that includes a Universal Resource Locator (URL).
